# EUROPÄISCHE PATENTANMELDUNG

(11) **EP 1 153 700 A2**
(43) Veröffentlichungstag der Anmeldung: **14.11.2001**
(21) Anmeldenummer: 01890141.3
(22) Anmeldetag: 11.05.2001
(51) Int. Cl.: B23P 19/00

(54) **Verfahren und Vorrichtung zum Bearbeiten der Enden eines Hydraulikschlauches**

(30) Priorität: 12.05.2000 AT 8292000
(71) Anmelder: Steyr-Werner Wälzlager und Industrieprodukte Gesellschfaft m.b.H., 4066 Pasching (AT)
(72) Erfinder: Peryl, Hubert, 4452 Ternberg (AT)
(74) Vertreter: Hübscher, Helmut, Dipl.-Ing.

(57) **Zusammenfassung**

Es wird ein Verfahren und eine Vorrichtung zum Bearbeiten der Enden (8, 20) eines Hydraulikschlauches (1) in aufeinanderfolgenden Arbeitsschritten beschrieben, wobei die Schlauchenden (8, 20) nach einer Schlauchförderung zu Bearbeitungswerkzeugen (21) diesen Werkzeugen (21) gegenüber ausgerichtet und bearbeitungsgerecht festgeklemmt werden. Um vorteilhafte Bearbeitungsbedingungen zu schaffen, wird vorgeschlagen, daß der Hydraulikschlauch (1) zu einem Schlauchwickel (2) mit einer von seiner Länge abhängigen Windungsanzahl eingerollt und mit seinen vom Schlauchwickel (2) abstehenden Enden (8, 20) auf einem Wickelträger (14) bearbeitungsgerecht festgeklemmt wird, bevor der Schlauchwickel (2) mit dem Wickelträger (14) zu den Werkzeugen (21) gefördert wird und die Schlauchenden (8, 20) über den Wickelträger (14) gegenüber dem Werkzeug (21) ausgerichtet werden.

## Beschreibung

Die Erfindung bezieht sich auf ein Verfahren zum Bearbeiten der Enden eines Hydraulikschlauches in aufeinanderfolgenden Arbeitsschritten, wobei die Schlauchenden nach einer Schlauchförderung zu Bearbeitungswerkzeugen diesen Werkzeugen gegenüber ausgerichtet und bearbeitungsgerecht festgeklemmt werden, sowie auf eine Vorrichtung zur Durchführung des Verfahrens.

Zum Anklemmen von Schlaucharmaturen an Hydraulikschläuche werden Pressen mit radial verschiebbaren Preßbacken eingesetzt, mit deren Hilfe das auf einen Nippel der Schlaucharmatur aufgeschobene Schlauchende zwischen dem Nippel und einer den Nippel umschließenden, zugfest mit dem Nippel verbundenen Fassungshülse festgeklemmt werden kann, wenn die Fassungshülse unter einer plastischen Verformung radial zusammengedrückt wird. Diese Presse verlangt wie andere Bearbeitungswerkzeuge, die beispielsweise zum Aufschieben des Schlauchendes auf den Nippel oder zum Vorbereiten des Schlauchendes für das Anklemmen einer Schlaucharmatur eingesetzt werden, eine ausreichend genaue Ausrichtung und bearbeitungsgerechte Spannung des Schlauchendes gegenüber dem jeweiligen Bearbeitungswerkzeug. Da im allgemeinen beide Enden eines Hydraulikschlauches zu bearbeiten sind und die zu bearbeitenden Hydraulikschläuche sehr unterschiedliche Längen aufweisen können, bringen die erforderlichen Förderwege zwischen den einzelnen nacheinander zum Einsatz kommenden Bearbeitungswerkzeugen erhebliche Schwierigkeiten mit sich, zumal zur Ausrichtung der Schlauchenden gegenüber dem jeweiligen Bearbeitungswerkzeug eine axiale Schlauchverlagerung notwendig wird.

Der Erfindung liegt somit die Aufgabe zugrunde, ein Verfahren der eingangs geschilderten Art zum Bearbeiten der Enden eines Hydraulikschlauches in aufeinanderfolgenden Arbeitsschritten so auszugestalten, daß eine einfache, platzsparende Förderung der zu bearbeitenden Hydraulikschläuche möglich wird, und zwar unter der Voraussetzung, daß eine zusätzliche Schlauchverlagerung zur Positionierung und bearbeitungsgerechten Spannung der Schlauchenden gegenüber den Bearbeitungswerkzeugen entfallen kann.

Die Erfindung löst die gestellte Aufgabe dadurch, daß der Hydraulikschlauch zu einem Schlauchwickel mit einer von seiner Länge abhängigen Windungsanzahl eingerollt und mit seinen vom Schlauchwickel abstehenden Enden auf einem Wickelträger bearbeitungsgerecht festgeklemmt wird, bevor der Schlauchwickel mit dem Wickelträger zu den Werkzeugen gefördert wird und die Schlauchenden über den Wickelträger gegenüber dem Werkzeug ausgerichtet werden.

Da der Hydraulikschlauch zu einem Schlauchwickel mit einer von seiner Länge abhängigen Windungsanzahl eingerollt und auf einem Wickelträger abgelegt wird, ergibt sich selbst für Schläuche mit sehr unterschiedlichen Längen ein im wesentlichen gleicher, durch den Wickeldurchmesser bestimmter Platzbedarf, weil sich bei annähernd gleichen Windungsdurchmessern die Schlauchwickel lediglich durch die von der Windungsanzahl abhängige Wickelhöhe unterscheiden, die jedoch im Hinblick auf das übliche Platzangebot eine untergeordnete Rolle spielt. Es können somit einheitliche Wickelträger für alle zu bearbeitenden Hydraulikschläuche eingesetzt werden, was die Förderbedingungen für die einzelnen Schläuche entscheidend verbessert. Die Ausrichtung der Schlauchenden gegenüber den jeweiligen Bearbeitungswerkzeugen wird über die diesbezügliche Ausrichtung der Wickelträger sichergestellt, wenn die Schlauchenden in einer vorgegebenen Lage auf dem Wickelträger festgelegt sind. Diese Festlegung der Schlauchenden wird vorteilhaft durch ein Festklemmen der vom Schlauchwickel abstehenden Schlauchenden auf dem Wikkelträger erreicht, wobei die Klemmung der Schlauchenden auf dem Wickelträger zugleich zum bearbeitungsgerechten Festhalten der Schlauchenden dient.

Zur Durchführung eines solchen Bearbeitungsverfahrens ist der Fördereinrichtung für den Hydraulikschlauch zu den einzelnen Bearbeitungswerkzeugen eine Wickeleinrichtung für den Hydraulikschlauch zuzuordnen. Weist dabei die Fördereinrichtung Wickelträger für je einen Schlauchwickel mit Klemmen für die vom Schlauchwickel abstehenden Schlauchenden auf, so braucht der Wickelträger zur Bearbeitung der in den Klemmen gehaltenen Schlauchenden des aufgenommenen Schlauchwickels nur gegenüber den Bearbeitungswerkzeugen verriegelt zu werden, um die notwendige Ausrichtung des zu bearbeitenden Schlauchendes gegenüber dem jeweiligen Bearbeitungswerkzeug sicherzustellen. Da die Schlauchenden in den Klemmen des Wickelträgers festgehalten werden, bedarf es keiner zusätzlichen Halterung für den Schlauchwickel, zumal es ja nur auf eine lagefeste Klemmung der Schlauchenden ankommt. Es können daher für die Wickelträger sehr einfache Konstruktionsbedingungen eingehalten werden.

In vielen Fällen werden die beiden Schlauchenden eines Hydraulikschlauches übereinstimmend bearbeitet. Zu diesem Zweck sind die Schlauchenden nacheinander den selben Bearbeitungswerkzeugen durch eine entsprechende Verlagerung des Wickelträgers zuzuführen, wenn nicht das Bearbeitungswerkzeug gegenüber dem verriegelten Wickelträger verlagert wird. Unabhängig von der gegenseitigen Verstellung von Wickelträger und Bearbeitungswerkzeug sollen jedoch die Schlauchenden in übereinstimmender Lage bearbeitet werden. Dies wird dann ohne zusätzliche Einstellung ermöglicht, wenn die Klemmen für die Schlauchenden auf dem Wickelträger zueinander parallel ausgerichtet und symmetrisch zu einer senkrecht zur Verstellrichtung verlaufenden Symmetrieebene angeordnet sind.

Die Wickeleinrichtung zum Einrollen des Hydraulikschlauches kann unterschiedlich konstruktiv gelöst werden. Es kommt ja lediglich darauf an, daß ein entsprechender Schlauchwickel bereitgestellt werden kann. Um besonders vorteilhafte Wickelbedingungen zu erhalten, kann jedoch die Wickeleinrichtung aus einer Zulaufführung für den Hydraulikschlauch, aus einem mit einer Klemme für ein Schlauchende versehenen, um eine vorzugsweise vertikale Wickelachse antreibbaren Wickelarm und aus einer Aufnahme für den sich bildenden Schlauchwickel bestehen. In diesem Fall bedarf es keines Wickelkernes zum Einrollen des Hydraulikschlauches, weil der der Wickeleinrichtung zugeförderte Hydraulikschlauch in der Zulaufführung an einem seitlichen Auswandern gehindert wird, so daß bei einer Abstimmung der Umlaufgeschwindigkeit des Wickelarmes und der Zulaufgeschwindigkeit des Hydraulikschlauches aufeinander ein Schlauchwickel mit einem vorgegebenen Windungsdurchmesser eingerollt werden kann. Es muß lediglich für eine ausreichende Abstützung des sich bildenden Schlauchwickels auf einer geeigneten Auflage gesorgt werden. Als Auflage für den sich bildenden Schlauchwickel kann vorteilhaft der Wickelträger eingesetzt werden, wobei es sich empfiehlt, den Wickelarm auf einem in Richtung der Zulaufführung für den Hydraulikschlauch verfahrbaren Schlitten zu lagern und mit einer der Höhe nach verstellbaren Klemme für das Schlauchende zu versehen. Das von der Klemme des Wickelarmes festgehaltene Ende des auf dem Wickelträger zu einem Schlauchwickel eingerollten Hydraulikschlauches braucht daher zur Übergabe an den Wickelträger lediglich über eine gegebenenfalls von einer Schlittenverstellung begleiteten Höhenverlagerung der Wickelarmklemme der zugehörigen Klemme des Wickelträgers übergeben zu werden, womit die geforderte Ausrichtung dieses Schlauchendes gegenüber dem Wickelträger sichergestellt ist. Wird der Hydraulikschlauch bei seinem Einrollen zu einem Schlauchwickel aus der Zulaufführung durch die geöffnete andere Klemme des Wickelträgers gezogen, so braucht zum Festklemmen des hinsichtlich der Schlauchzuförderung hinteren Schlauchendes lediglich diese Klemme geschlossen zu werden. Dieser Arbeitsverlauf verlangt allerdings ein Einfädeln des vorderen Schlauchendes in die geöffnete Klemme des Wickelträgers. Um diesen Arbeitsschritt zu vermeiden, kann der Wickelarm über den Schlitten in Richtung der Zulaufführung für den Hydraulikschlauch verlagert werden, um nach der Klemmung des vorderen Endes des Schlauchwickels auf dem Wickelträger das hintere Schlauchende durch die Klemme des Wickelarmes zu erfassen und der zweiten Klemme des Wickelträgers zu übergeben. Sind zu diesem Zweck die Klemmen des Wicklungsträgers in einem dem Durchmesser des Umlaufkreises der Wickelarmklemme entsprechenden Abstand voneinander angeordnet, so wird eine unmittelbare Übergabe der Schlauchenden an die zueinander parallelen Klemmen des Wickelträgers ermöglicht. In zueinander diametralen Lagen des Wickelarmes liegen ja die Wickelarmklemmen parallel zueinander.

Anhand der Zeichnung wird das erfindungsgemäße Verfahren näher erläutert. Es zeigen
- Fig. 1: eine erfindungsgemäße Vorrichtung zum Bearbeiten der Enden eines Hydraulikschlauches ausschnittsweise im Bereich der Wickeleinrichtung für den Hydraulikschlauch in einer vereinfachten Draufsicht,
- Fig. 2: die Wickeleinrichtung in einer Seitenansicht in einem größeren Maßstab,
- Fig. 3: den mit einem Schlauchwickel beladenen Wickelträger im Bereich von Arbeitsstationen in einer schematischen Draufsicht und
- Fig. 4: den mit einem Schlauchwickel beladenen Wickelträger in einem Schnitt nach der Linie IV-IV der Fig. 3.

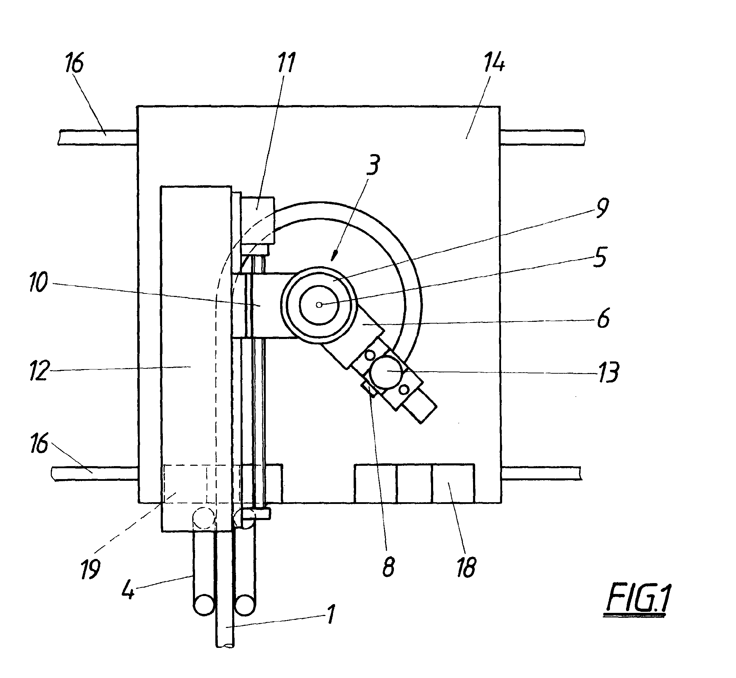

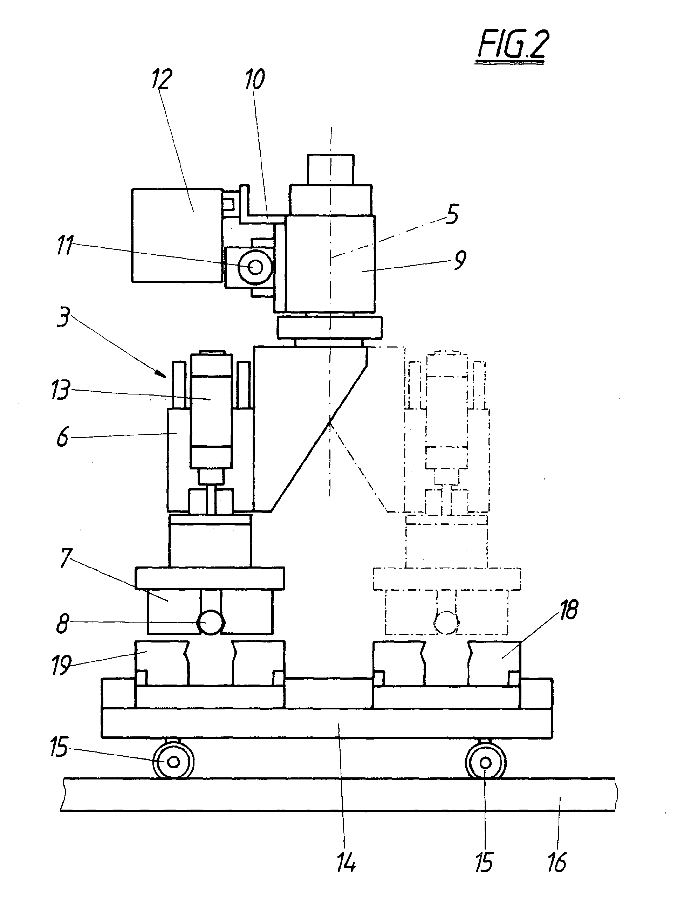

Um einen Hydraulikschlauch 1 zu einem Schlauchwickel 2 einrollen zu können, wird eine Wickeleinrichtung 3 vorgesehen, die gemäß dem in den Fig. 1 und 2 dargestellten Ausführungsbeispiel aus einer Zulaufführung 4 für den einzurollenden Hydraulikschlauch 1 und aus einem um eine vorzugsweise vertikale Wickelachse 5 drehbar gelagerten Wickelarm 6 besteht, der eine Klemme 7 für das einzurollende Schlauchende 8 trägt. Der Wickelarm 6, der über einen Motor 9 angetrieben wird, ist auf einem Schlitten 10 gelagert, der mit Hilfe eines Stelltriebes 11 entlang eines Trägers 12 in Richtung der Zulaufführung 4 verfahren werden kann. Die Klemme 7 des Wickelarmes 6 ist mit Hilfe eines Hubzylinders 13 der Höhe nach verstellbar geführt.

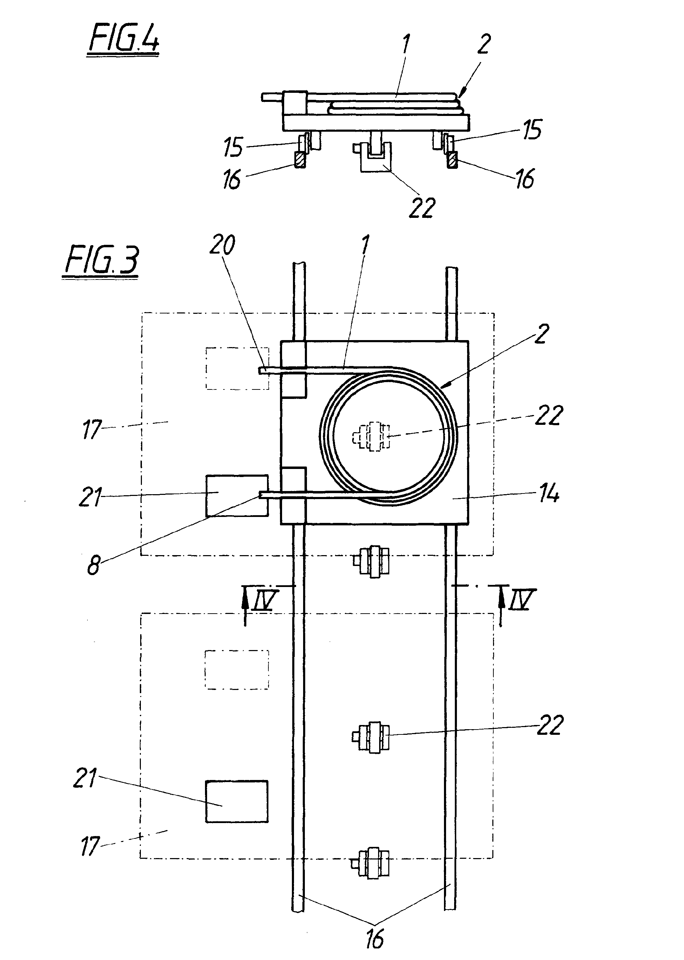

Der über die Zulaufführung 4 der Wickeleinrichtung 3 zugeförderte Hydraulikschlauch 1 wird an seinem in Zulaufrichtung vorderen Ende 8 durch die Klemme 7 des Wickelarmes 6 erfaßt, indem der Wickelarm 6 über den Schlitten 10 gegen die Zulaufführung verfahren und die Klemme 7 mit Hilfe des Stellzylinders 13 abgesenkt wird. Nach einem Schließen der Klemme 7 und deren Anhebung durch den Stellzylinder 13 wird der Wickelarm 6 über den Schlitten 10 in eine Wickelposition zurückgefahren, um den Hydraulikschlauch 1 zu einem Schlauchwickel 2 einzurollen, sobald der Wickelarm 6 über den Motor 9 um die Wickelachse 5 drehend angetrieben wird. Da die Zulaufgeschwindigkeit des Hydraulikschlauches 1 auf die Umlaufgeschwindigkeit des Wickelarmes 6 abgestimmt ist, ergeben sich entsprechende Windungsdurchmesser für den Schlauchwickel 2, der sich beim Aufwickeln auf einem unterhalb des Wickelarmes 6 vorgesehenen Wickelträger 14 abstützt. Zur besseren Führung des Schlauchwickels 2 auf dem Wickelträger 14 kann dieser eine Aufnahmemulde bilden, die jedoch aus Übersichtlichkeitsgründen nicht dargestellt ist. Der Wickelträger 14 ist mit Laufrollen 15 versehen und dient als Förderwagen, der entlang von Schienen 16 zwischen der Wickeleinrichtung 3 und verschiedenen Arbeitsstationen 17 vorzugsweise in einem Umlauf verfahren werden kann, wie sie in der Fig. 3 angedeutet sind. Der Wickelträger 14 ist auf einer Seite mit zwei Klemmen 18 und 19 einerseits für das vordere Schlauchende 8 und anderseits für das hintere Schlauchende versehen, das in der Fig. 3 mit 20 bezeichnet ist. Nach dem Einrollen des Hydraulikschlauches 1 zum Schlauchwickel 2 wird das von der Klemme 7 des Wickelarmes 6 erfaßte vordere Schlauchende 8 der Klemme 18 des Wickelträgers 14 nach einer entsprechenden Schlittenverlagerung durch ein Absenken der Klemme 7 des Wickelarmes 6 übergeben, so daß nach einem Schließen der Klemme 18 das vordere Ende 8 des Hydraulikschlauches 1 am Wickelträger 18 bearbeitungsgerecht festgeklemmt wird. Das hintere Schlauchende 20 kann dann ebenfalls durch eine entsprechende Verlagerung des Wickelarmes 6 über die Wickelarmklemme 7 erfaßt und der Klemme 19 des Wickelträgers 14 übergeben werden, wonach beide Schlauchenden bearbeitungsgerecht gehalten werden. Es braucht daher der Wickelträger 14 zur Bearbeitung der Schlauchenden 8, 20 lediglich zu den einzelnen Arbeitsstationen 17 verfahren zu werden, wie dies in den Fig. 3 und 4 angedeutet ist. Der durch den Wickelträger 14 gebildete Förderwagen kann entlang der Schienen 16 beispielsweise mittels eines Kettentriebes von der Wickeleinrichtung 3 zur ersten Arbeitsstation 17 verfahren werden, in der das eine Schlauchende 8 mit Hilfe eines Bearbeitungswerkzeuges 21 bearbeitet wird. Um eine genaue Positionierung des Schlauchendes 8 gegenüber dem Bearbeitungswerkzeug 21 sicherzustellen, wird der Wickelträger 14 gegenüber dem Bearbeitungswerkzeug 21 verriegelt. In der Fig. 4 ist zu diesem Zweck eine Verriegelungseinrichtung 22 schematisch angedeutet. Nach einer Bearbeitung des Schlauchendes 8 kann das andere Schlauchende 20 in gleicher Weise mit Hilfe des selben Bearbeitungswerkzeuges 21 bearbeitet werden, wenn der Wickelträger 14 um einen entsprechenden Förderschritt weiterbewegt wird. Auch in dieser Arbeitsstellung ist der Wickelträger 14 gegenüber dem Bearbeitungswerkzeug 21 zu verriegeln, was eine Mehrfachanordnung der Verriegelungseinrichtung 22 bedingt. Bei der Bearbeitung des zweiten Schlauchendes 20 wird ebenfalls der Vorteil ausgenützt, daß kein Umspannen der Schlauchenden erforderlich ist. Es braucht wohl nicht näher ausgeführt zu werden, daß verschiedene Arbeitsstationen 17 mit unterschiedlichen Bearbeitungswerkzeugen 21 aneinandergereiht werden können, um die jeweils geforderten Arbeitsschritte aufeinanderfolgend durchzuführen. Wegen des zu einem Schlauchwickel 2 eingerollten Hydraulikschlauches 1 und der Ablage dieses Schlauchwickels 2 auf einem Wickelträger 14, in dem die vom Schlauchwickel 2 abstehenden Schlauchenden 8, 20 bearbeitungsgerecht festgeklemmt sind, können sehr einfache Förder- und Bearbeitungsbedingungen sichergestellt werden, was eine wesentliche Voraussetzung für eine automatische Bearbeitung der Schlauchenden darstellt. Wie in der Fig. 3. strichpunktiert angedeutet ist, können in einer Arbeitsstation 17 für jedes Schlauchende je ein Bearbeitungswerkzeug 21 zur Verfügung gestellt werden, wodurch die Bearbeitungszeit durch die gleichzeitige Bearbeitung beider Schlauchenden erheblich verkürzt werden kann.

## Patentansprüche

1. Verfahren zum Bearbeiten der Enden eines Hydraulikschlauches in aufeinanderfolgenden Arbeitsschritten, wobei die Schlauchenden nach einer Schlauchförderung zu Bearbeitungswerkzeugen diesen Werkzeugen gegenüber ausgerichtet und bearbeitungsgerecht festgeklemmt werden, **dadurch gekennzeichnet, daß** der Hydraulikschlauch zu einem Schlauchwickel mit einer von seiner Länge abhängigen Windungsanzahl eingerollt und mit seinen vom Schlauchwickel abstehenden Enden auf einem Wickelträger bearbeitungsgerecht festgeklemmt wird, bevor der Schlauchwickel mit dem Wickelträger zu den Werkzeugen gefördert wird und die Schlauchenden über den Wickelträger gegenüber dem Werkzeug ausgerichtet werden.

2. Vorrichtung zur Durchführung des Verfahrens nach Anspruch 1 mit einer Fördereinrichtung für den Hydraulikschlauch zu einzelnen Bearbeitungswerkzeugen, **dadurch gekennzeichnet, daß** der Fördereinrichtung eine Wickeleinrichtung (3) für den Hydraulikschlauch (1) zugeordnet ist, daß die Fördereinrichtung Wickelträger (14) für einen Schlauchwickel (2) mit Klemmen (18, 19) für die vom Schlauchwickel (2) abstehenden Schlauchenden (8, 20) aufweist und daß die Wickelträger (14) gegenüber den Bearbeitungswerkzeugen (21) verriegelbar sind.

3. Vorrichtung nach Anspruch 2, **dadurch gekennzeichnet, daß** die Klemmen für die Schlauchenden (8, 20) auf dem Wickelträger (14) zueinander parallel angeordnet sind.

4. Vorrichtung nach Anspruch 2 oder 3, **dadurch gekennzeichnet, daß** der Wickelträger (14) eine Aufnahmemulde für den Schlauchwickel (2) bildet.

5. Vorrichtung nach einem der Ansprüche 2 bis 4, **dadurch gekennzeichnet, daß** die Wickeleinrichtung (3) aus einer Zulaufführung (4) für den Hydraulikschlauch (1), aus einem mit einer Klemme (7) für ein Schlauchende (8) versehenen, um eine vorzugsweise vertikale Wickelachse (5) antreibbaren Wikkelarm (6) und aus einer Aufnahme für den sich bildenden Schlauchwickel (2) besteht.

6. Vorrichtung nach Anspruch 5, **dadurch gekennzeichnet, daß** der Wickelträger (14) die Aufnahme für den Schlauchwickel (2) bildet und daß der Wikkelarm (6) auf einem in Richtung der Zulaufführung (4) für den Hydraulikschlauch (1) verfahrbaren Schlitten (10) gelagert ist und eine der Höhe nach verstellbare Klemme (7) für das Schlauchende (8) aufweist.

7. Vorrichtung nach Anspruch 5 oder 6, **dadurch gekennzeichnet, daß** die Klemmen (18, 19) des Wicklungsträgers (14) in einem dem Durchmesser des Umlaufkreises der Wickelarmklemme (7) entsprechenden Abstand voneinander angeordnet sind.
